## Europäisches Patentamt

## European Patent Office

## Office européen des brevets

(11) Veröffentlichungsnummer: **0 154 011 B1**

(12) # EUROPÄISCHE PATENTSCHRIFT

(45) Veröffentlichungstag der Patentschrift:
09.03.88

(21) Anmeldenummer: 84115070.9

(22) Anmeldetag: 10.12.84

(51) Int. Cl.⁴: **B 01 J 8/04**, B 01 J 35/04

(54) Katalysatoranordnung aus vielen geordneten Katalysator-Trägerkörpern.

(30) Priorität: 02.03.84 DE 3407866
20.06.84 DE 3422929

(43) Veröffentlichungstag der Anmeldung:
11.09.85 Patentblatt 85/37

(45) Bekanntmachung des Hinweises auf die Patenterteilung:
09.03.88 Patentblatt 88/10

(84) Benannte Vertragsstaaten:
AT CH DE FR GB LI NL

(56) Entgegenhaltungen:
EP - A - 0 073 150
DE - A - 1 444 367
DE - A - 2 848 086
DE - A - 3 026 199
US - A - 4 439 350

(73) Patentinhaber: INTERATOM Gesellschaft mit
beschränkter Haftung, Friedrich-Ebert-Strasse,
D-5060 Bergisch Gladbach 1 (DE)

(72) Erfinder: Matentzoglu, Nikolaus Dipl.-Ing.,
Birkenweg 13, D-5100 Aachen (DE)
Erfinder: Zentis, Alfred, Dipl.-Ing., Heisterner Strasse 35,
D-5180 Eschweiler (DE)
Erfinder: Klas, Ernst, Dipl.-Ing., Bergaggerstrasse 33,
D-5024 Lohmar 1 (DE)
Erfinder: Schumacher, Günther,
Marie-Juchacz-Strasse 44, D-5110 Alsdorf (DE)
Erfinder: Stausebach, Dieter, Dipl.-Ing.,
Reginharstrasse 28, D-5060 Bergisch-Gladbach (DE)

(74) Vertreter: Mehl, Ernst, Dipl.-Ing. et al, Postfach 22 01 76,
D-8000 München 22 (DE)

ACTORUM AG

## Beschreibung

Die vorliegende Erfindung betrifft eine Katalysatoranordnung nach dem Oberbegriff des ersten Anspruchs. Bei vielen chemischen Verfahren ist es üblich, Katalysatoren zu verwenden, welche vorzugsweise auf Trägerkörpern mit einer möglichst grossen Oberfläche im Reaktionsbereich angeordnet werden. In vielen Fällen ist dabei im Reaktionsbereich eine hohe Temperatur zu beherrschen, so z.B. bei der Kohlevergasung und Methanspaltung. In solchen Fällen verwendet man oft keramische Trägerkörper, welche mit dem Katalysatormaterial beschichtet bzw. aus einer geeigneten Mischung, die schon Katalysatormaterial enthält, hergestellt sind. So sind Schüttungen aus sogenannten Raschig-Ringen bekannt, durch welche ein Fluid hindurchgeleitet wird. Raschig-Ringe sind kleine hohlzylindrische Keramikkörper, welche eine hohe Temperaturfestigkeit aufweisen und insbesondere in Verbindung mit nickelhaltigen Katalysatoren verwendet werden.

Insbesondere bei der Kohlevergasung und der Methanspaltung, aber auch bei anderen grosschemischen Prozessen, werden wegen des hohen Durchsatzes an Reaktionsstoffen sehr grosse Reaktionsvolumina benötigt, beispielsweise in der Form eines Röhrenspaltofens. Die Bestückung eines grossen, insbesondere sehr lang gestreckten Volumens, mit einem Katalysatormaterial, welches zusätzlich für ein Fluid durchlässig sein soll, bereitet verschiedene Schwierigkeiten. Einerseits soll der Druckverlust im Katalysatorträgermaterial nicht zu gross werden, andererseits muss das Katalysatormaterial nach einer bestimmten Betriebszeit ausgetauscht werden können, was sich bei Keramikmaterial als Katalysator-Trägerkörper als schwierig erweist. Wegen der Temperaturdehnungen beim Betrieb des Röhrenspaltofens sackt eine Schüttung im Laufe des Betriebes nach und wird im unteren Bereich stark verdichtet, wodurch sich ein Auswechseln der gegeneinander verkanteten Katalysator-Trägerkörper nicht ohne Zuatzeinrichtungen bewerkstelligen lässt.

Als Alternative zu einer Schüttung wurden sogenannte Scheibenkatalysatoren vorgeschlagen, welche auf ein Zentralrohr geschichtet werden und sich vergleichsweise leicht auswechseln lassen. Um aber eine genügend grosse Oberfläche zu erreichen, müssen die Scheiben ein komplizierte Struktur aufweisen, was bei thermischen Wechselbelastungen und grossen Temperaturgradienten zum Zerbrechen der Scheiben führen kann. Die Bruchstücke wiederum erschweren ein Austauschen der Scheiben. Zusätzlich entstehen auch bei Fragen des Druckverlustes, der wirksamen katalytischen Oberfläche und der Strömungsführung einige Schwierigkeiten.

In der DE-A 28 48 086.6 wird ein Rohrreaktor für katalytische Prozesse, dessen Reaktionszone eine das Rohrvolumen im wesentlichen ausfüllende Katalysatorschüttung aufweist, beschrieben mit einer oder mehreren, die Katalysatorschüttung aufnehmenden und aus dem Rohr entfernbaren Korbanordnungen, die durch Drahtnetzzylinder mit Lochscheiben an den Stirnseiten gebildet und/oder auf ein als Tragrohr dienendes zentrales Reaktionsgasrohr aufgeschoben sein können.

Aufgabe der vorliegenden Erfindung ist eine Katalysatoranordnung, welche die Nachteile des Standes der Technik vermeidet, insbesondere ein leichtes Auswechseln nach der entsprechenden Betriebszeit ermöglicht. Zusätzlich soll die Katalysatoranordnung für schon bestehende Reaktionsräume geeignet und ohne grossen zusätzlichen Aufwand herstellbar sein.

Zur Lösung dieser Aufgabe wird eine Anordnung nach dem Hauptanspruch vorgeschlagen. Untergeordnet ist in diesem Zusammenhang zu verstehen, dass die Katalysator-Trägerkörper nicht völlig ungeordnet in den Reaktionsraum geschüttet werden, sondern beispielsweise mit einer parallelen Ausrichtung aller gleichartigen Körper angeordnet sind. Bei dieser Art der Anordnung gibt es zunächst noch verschiedene Möglichkeiten dafür, welche Form die einzelnen kleinen Katalysator-Trägerkörper tatsächlich haben, jedoch bieten sich die bewährten hohlzylinderförmigen Raschig-Ringe auch für die erfindungsgemässe Ausführung an. Durch die Unterteilung der Katalysator-Trägerkörper in verschiedene getrennte Schichten lassen sich aber schon die Schwierigkeiten beim Auswechseln des Katalysatormaterials vermeiden.

In weiterer Ausgestaltung der Erfindung wird im Anspruch 2 vorgeschlagen, dass die Zusatzstrukturen aus durchbrochenem Blech oder Drahtgewebe jeweils eine Schicht von Katalysator-Trägerkörpern ganz oder teilweise käfigartig umgeben sollen. Drahtgewebe oder durchbrochenes Blech stellen keinen besonders hohen Strömungswiderstand dar und unterstützen sogar die Verwirbelung des Fluids. Diese Ausführungsform ermöglicht, dass die einzelnen Schichten aus Katalysator-Trägerkörpern vorgefertigt und nacheinander in den Reaktionsraum eingesetzt werden können, wobei die käfigartige Form ein späteres Auswechseln erheblich erleichtert.

In spezieller Ausgestaltung der Erfindung wird im Anspruch 3 vorgeschlagen, dass die Katalysator-Trägerkörper Raschig-Ringe jeweils einlagig dicht nebeneinander auf den Zusatzstrukturen angeordnet sind, vorzugsweise mit einer Ausrichtung ihrer Bohrung in Strömungsrichtung des Fluids, wobei viele dieser einlagigen Anordnungen übereinander geschichtet sind. Diese Ausführungsform steht in ihrer katalytischen Wirkung denen einer bewährten Schüttung aus Raschig-Ringen nicht nach, ermöglicht jedoch eine einfachere Handhabung beim Auswechseln des Katalysator-Materials. Zusätzlich bietet sich bei der Ausrichtung von Raschig-Ringen in Strömungsrichtung noch der Vorteil, dass die Innenbohrung grösser sein kann als bei in einer Schüttung verwendeten Raschig-Ringen. In einer Schüttung müssen die Ringe eine gewisse Festigkeit aufweisen, damit sie nicht zerdrückt werden, insbesondere bei sehr hohen Schüttungen. Bei ausgerichteten aufrechtstehenden Raschig-Ringen ist die Tragfähigkeit aber auch bei sehr dünnwandigen Ausführungen ausreichend, um das Zerbrechen einzelner Raschig-Ringe zu vermeiden. Durch eine vergrösserte Innenbohrung wird gleichzeitig die wirksame Oberfläche vergrössert und der Druckverlust verringert. Überhaupt lassen sich bei dieser Anordnung die Masse der Raschig-Ringe in erheblichem Masse den jeweiligen Gegebenheiten anpassen, ohne dass Rücksicht auf Festigkeitsprobleme genommen werden muss.

Für die bis jetzt beschriebenen erfindungsgemässen Ausführungen ist die Form des Reaktionsraumes nicht näher festgelegt. Erfindungsgemässe Katalysatoranordnungen können für die meisten Reaktionsräume angepasst werden. Im Anspruch 4 wird eine spezielle Ausgestaltung für einen Röhrenspaltofen beschrieben, welcher als Besonderheit ein Mittelrohr aufweist, um welchen der Reaktionsraum konzentrisch als Ringraum angeordnet ist. In diesem Falle muss die Zwischenstruktur entsprechend der Form des Ringraumes gestaltet sein. Es wird insbesondere vorgeschlagen, die Zwischenstrukturen aus umgebördelten, durchbrochenen Blechen oder Drahtgeweben herzustellen, wobei die Umbördelungen im Aussenbereich und die Umbördelungen im Bereich des zentralen Rohres so gestaltet sind, dass sie zwar an den Rohrwänden mit geringem Spiel anliegen, jedoch ein Herausziehen der Zusatzstrukturen mit Katalysator-Trägerkörpern zumindest nach einer Seite ohne Verkanten möglich ist. Eine so ausgestaltete Zwischenstruktur kann mit den jeweiligen Schichten von Katalysator-Trägerkörpern einfach über das zentrale Mittelrohr geschoben und in den Reaktionsraum eingebracht werden.

In den Ansprüchen 5, 6, 7, 8 werden Katalysatoranordnungen mit speziellen Ausgestaltungen der Zusatzstruktur beschrieben. Anhand der Zeichnung werden diese Ausgestaltungen mit Hilfe von Ausführungsbeispielen noch näher erläutert. Weitere spezielle Ausgestaltungen werden in den Ansprüchen 9, 10 und 11 beschrieben. Danach werden als Katalysator-Trägerkörper Raschig-Ringe verwendet, welche lagenweise auf durchbrochenen Blechen aufrechtstehend angeordnet sind, wobei die durchbrochenen Bleche im Bereich ihrer äusseren und ggf. inneren Ränder senkrecht abgewinkelte Stege etwa im Abstand der Durchmesser der Raschig-Ringe aufweisen, auf welche jeweils Raschig-Ringe aufgesteckt sind, die somit die äussere Grenze jeder Lage bilden.

Diese Anordnung ermöglicht ein Vorfertigen jeweils einzelner Lagen von Raschig-Ringen und ggf. auch das Zusammensetzen dieser Lagen zu grösseren Kartuschen. Durch die Anordnung der äusseren und ggf. auch der inneren Reihe von Raschig-Ringen jeder Lage auf abgewinkelten Stegen, kann nunmehr die Rohrwand des Reaktionskanales, und ggf. auch ein im Inneren angeordnetes Zentralrohr, nicht mehr mit dem Material des durchbrochenen Bleches in Berührung kommen, sondern nur noch mit Raschig-Ringen. Dadurch haben auch evtl. Randströmungen direkten Kontakt mit dem Katalysator-Material, wodurch die oben erwähnten Randeffekte verringert werden. Ausserdem sitzen die Raschig-Ringe mit etwas Spiel auf den Stegen bzw. liegen ansonsten mit etwas Spiel auf dem durchbrochenen Blech auf, wodurch eine flexiblere Anpassung bei thermischen Schwankungen bzw. fertigungstechnischen Schwankungen des Durchmessers des Reaktionskanales leichter kompensiert werden kann.

In weiterer Ausgestaltung der Erfindung wird im Anspruch 10 vorgeschlagen, dass die Ränder der durchbrochenen Bleche etwas über die Fusspunkte der abgewinkelten Stege hinausragen, wodurch die äusseren bzw. inneren Ringe mehr Halt bekommen. Damit jedoch ein Kontakt des Bleches mit der Kanalwand vermieden wird, dürfen die Bleche nicht zu weit über den Fusspunkt hinausragen. Jedenfalls sollten die Bleche weniger als der Radius der Raschig-Ringe überstehen, vorzugsweise jedoch sogar geringfügig weniger als die Wandstärke der Raschig-Ringe, wodurch ein Kontakt der Bleche mit der Kanalwand sicher verhindert wird.

In weiterer Ausgestaltung der Erfindung wird im Anspruch 11 insbesondere im Hinblick auf Kanäle mit ringförmigem Querschnitt, wie sie beim Röhrenspaltofen vorliegen, vorgeschlagen, dass die Abmessungen der gelochten Bleche kleiner als der lichte Querschnitt der Kanäle sind und dass die Masse der Stege und der Raschig-Ringe gerade so gewählt sind, dass an allen Wänden Raschig-Ringe mit geringem Spiel anliegen. Auf diese Weise werden die Randeffekte am stärksten unterdrückt. Insgesamt können verschiedene Masse der vorgeschlagenen Katalysatoranordnung im Hinblick auf den jeweiligen Anwendungsfall optimiert werden. Dabei sind folgende Gesichtspunkte von Bedeutung:

Da die Raschig-Ringe aufrecht stehen und im wesentlichen nur in dieser Richtung belastet werden, können sie dünnwandiger als bei unregelmässigen Schüttungen ausgeführt werden. Dadurch lässt sich die Oberfläche vergrössern. Je nach dem inneren Durchmesser der Raschig-Ringe und ihrer Höhe richtet sich das Spiel und die Gefahr des Verkippens der Raschig-Ringe auf den abgewinkelten Stegen, was wiederum durch die Breite und Länge der Stege beeinflusst werden kann.

Ausführungsbeispiele der Erfindung sind in der Zeichnung dargestellt, und zwar zeigen

Fig. 1 einen Ausschnitt aus einem Reaktionsraum eines Röhrenspaltofens,

Fig. 2 eine schematische Draufsicht auf eine durch ein Drahtgeflecht gehaltene einlagige Katalysatorschicht aus Raschig-Ringen,

Fig. 3 einen Querschnitt durch Fig. 2 entlang der Linie III–III,

Fig. 4 einen Querschnitt durch eine geschlossene käfigförmige Zusatzstruktur,

Fig. 5a – e mögliche Ausgestaltungen der Zusatzstruktur,

Fig. 6 einen an sich bekannten Raschig-Ring,

Fig. 7 ein erfindungsgemässes durchbrochenes Blech mit noch nicht abgewinkelten Stegen,

Fig. 8 einen vergrösserten Ausschnitt aus dem Randbereich dieses Bleches und

Fig. 9 einen Schnitt durch das gelochte Blech entlang der Linie IX–IX.

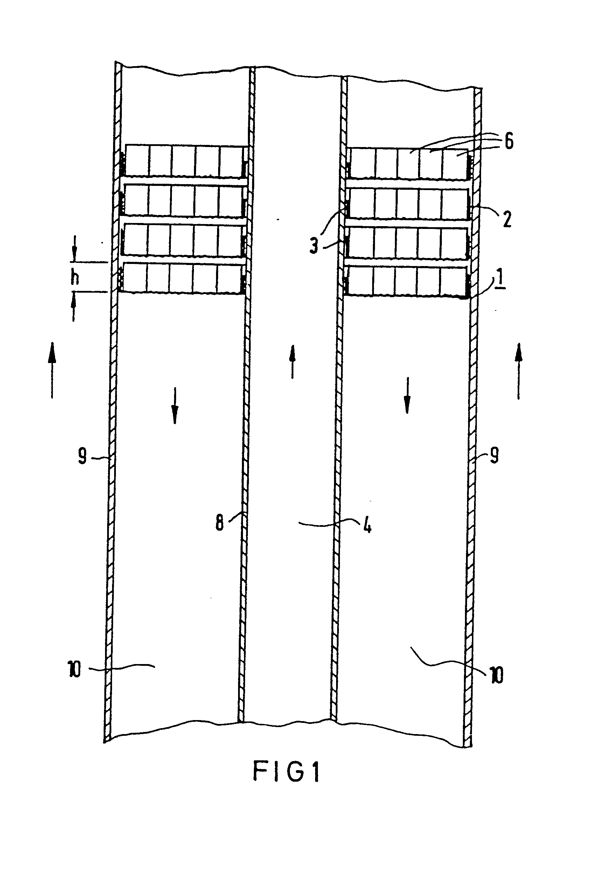

Fig. 1 zeigt schematisch einen Ausschnitt aus einem Röhrenspaltofen, wobei die Strömungsrichtung der Gase in den einzelnen Bereichen jeweils durch Pfeile angedeutet ist. Bei dem gewählten Beispiel eines Röhrenspaltofens strömt heisses Helium mit einer Temperatur von bis zu 950°C an grossen Rohren 9 aufwärts, in welchen ein Reaktionsgas im Ringraum 10 abwärts strömt. In diesem Ringraum 10 sind Katalysator-Trägerkörper angeordnet, welche die chemische Reaktion, beispielsweise die Methanspaltung unterstützen sollen. Diese Katalysator-Trägerkörper 6, vorzugsweise Raschig-Ringe, sind in Zwischenstrukturen 1 aus Drahtgeflecht oder durchbrochenen Blechen gehaltert mit Umbördelungen 2 im Aussenbereich und gegebenenfalls auch Umbördelungen 3 im Bereich eines zentralen Innenrohres 8. Im Inneren 4 des zentralen Rohres 8 strömt das Produktgas wieder aufwärts. Die schalen- bzw. käfigartigen Zwischenstrukturen 1 lassen sich wegen ihrer Umbördelungen 2, 3 zumindest in einer Richtung leicht herausnehmen. Da das Beschicken des Reaktionsraumes mit neuen Katalysatorträgern in der Regel unproblematisch ist, wird man die Zwischenstrukturen vorzugsweise so einsetzen, dass die Umbörderlung beim Herausziehen später nachgeben kann und sich nicht verkantet.

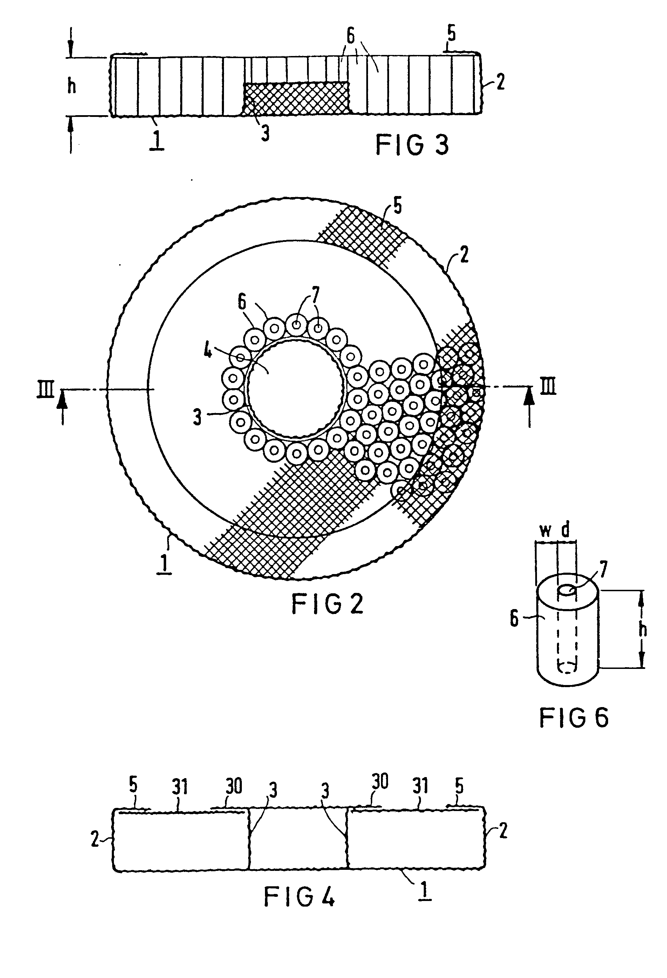

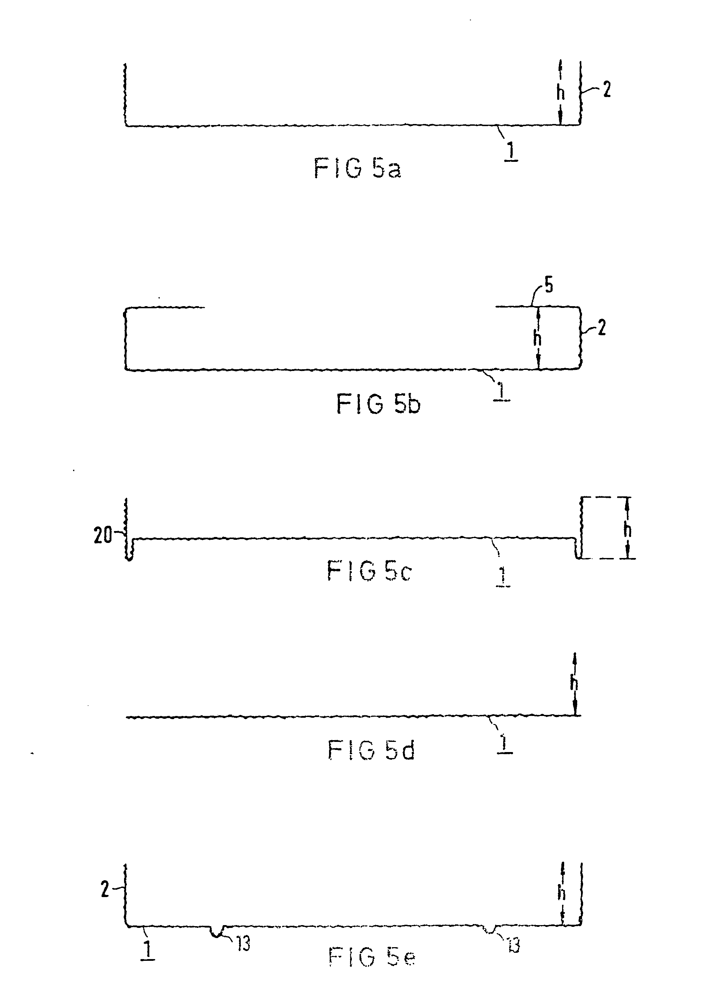

In Fig. 2 und 3 ist ein besonderes Ausführungsbeispiel für die mögliche Gestaltung der Zwischenstruktur bei Verwendung von Raschig-Ringen als Katalysator-Trägerkörpern beschrieben. Fig. 2 zeigt eine Draufsicht und Fig. 3 einen Querschnitt durch eine erfindungsgemässe Zusatzstruktur mit einer Schicht von Raschig-Ringen. Eine solche Zwischenstruktur kann auch aus zwei oder mehr Segmenten bestehen, wodurch das Auswechseln noch leichter wird. Ein Drahtgewebe 1, welches in seinen Umrissen denen des Reaktionsraumes entspricht, ist dicht mit aufrechtstehenden Raschig-Ringen 6 besetzt. An den Aussenseiten ist das Drahtgewebe umgebördelt 2, wobei die Umbördelung auch noch um die Raschig-Ringe herumgezogen sein kann, so dass sich ein mehr oder weniger geschlossener Käfig bildet. Jedenfalls ist ein gewisses, die Oberseite der Raschig-Ringe bedeckendes Stück 5 des Drahtgeflechtes in manchen Fällen von Vorteil. Im Inneren im Bereich des Zentralrohres 4 weist das Drahtgewebe ebenfalls eine Umbördelung 3 auf, welche nach den jeweiligen Bedürfnissen mehr oder weniger gross sein kann. Die Form der Zusatzstruktur kann überhaupt in weiten Grenzen den jeweiligen Anforderungen angepasst werden, wie dies in Fig. 5 noch näher erläutert wird. Prinzipiell ist es möglich, mehrere der Zwischenstrukturen untereinander, beispielsweise durch Punktschweissen, zu verbinden, so dass eine mehrschichtige Kartusche aus Katalysator-Trägerkörpern entsteht.

In Fig. 4 ist eine weitere Ausführungsmöglichkeit der Zusatzstruktur beschrieben, wobei hier durch geeignete Umbördelungen 5 bzw. 30 auf der Aussenseite bzw. Innenseite und durch ein zusätzliches Gitterbauteil 31 ein vollständiger Käfig für die Raschig-Ringe gebildet wird. Statt eines Drahtgeflechtes ist auch die Verwendung von anderen vergleichbaren Materialien, insbesondere eines durchbrochenen Bleches oder dergleichen möglich.

In Fig. 5a – e werden verschiedene Ausführungsbeispiele der Zusatzstruktur dargestellt, wobei diese nur zur Veranschaulichung der Vielfalt der Möglichkeiten dienen und keineswegs eine abschliessende Aufzählung darstellen. In Fig. 5 sind nur die Umbördelungen im Aussenbereich dargestellt, wobei selbstverständlich auch im Bereich des zentralen Innenrohres Umbördelungen vorgesehen werden können und wobei jede Kombination der dargestellten Formen möglich ist. Fig. 5a zeigt eine Zusatzstruktur mit einer einfachen Umbördelung 2 an der Aussenseite, welche in ihrer Länge kleiner oder gleich der Höhe der Raschig-Ringe sein kann. Fig. 5b zeigt eine Umbördelung 2 an der Aussenseite, welche noch oberhalb der Schicht der Katalysator-Trägerkörper weitergeführt 5 ist. In diesem Falle sollte die Höhe h des entstehenden Käfigs gleich der Höhe der Raschig-Ringe sein. In Fig. 5c ist eine besondere Art 20 der Umbördelung der Zusatzstruktur dargestellt, welche bewirkt, dass aus jeweils zwei benachbarten Zusatzstrukturen ein fast vollständiger Käfig für eine Schicht von Katalysator-Trägerkörpern entsteht. Die Umbördelung kann dabei kleiner oder gleich der Höhe h der Katalysator-Trägerkörper sein. Hier wäre auch denkbar, die Umbördelung etwas länger als die Höhe der Katalysator-Trägerkörper auszuführen und die Zusatzstrukturen nach dem Füllen mit Katalysator-Trägerkörpern ineinander zu stecken und zu Kartuschen zu verbinden. Fig. 5d zeigt die einfachste Möglichkeit der Ausgestaltung einer Zusatzstruktur, nämlich ein entsprechend zugeschnittenes Drahtgewebe oder gelochtes Blech ohne jede Umbördelung. Dies könnte insbesondere dann in Betracht kommen, wenn die Katalysator-Trägerkörper durch zusätzliche Massnahmen, beispielsweise durch «Festnähen» mit einem Draht oder dergleichen auf der Zusatzstruktur fixiert würden.

Fig. 5e zeigt beispielhaft die Möglichkeit, Abstandhalter 13 zwischen den einzelnen Zusatzstrukturen vorzusehen. Je nach Dicke der Drahtgeflechte bzw. gelochten Bleche und dergleichen kann es nötig sein zur genügenden Verwirbelung des Fluids zwischen den einzelnen Katalysator-Trägerkörper-Schichten etwas Abstand zu halten. Dazu sind prinzipiell sehr viele verschiedene Möglichkeiten denkbar. Eine Möglichkeit ist beispielsweise, einige etwas höhere Katalysator-Trägerkörper in jeder Schicht vorzusehen, was allerdings zum «Klappern» der übrigen Körper führen könnte. Besser ist es durch eine geeignete Zahl der Ausbauchungen oder Noppen 13 in der Zusatzstruktur einen genügenden Abstand aufrecht zu erhalten. Die gleichmässigste Belastung aller Katalysator-Trägerkörper wird aber sicherlich durch Wahl eines genügend dicken Drahtgeflechtes oder durch die geeignete Konstruktion eines Käfigs, beispielsweise den in Fig. 4, sichergestellt.

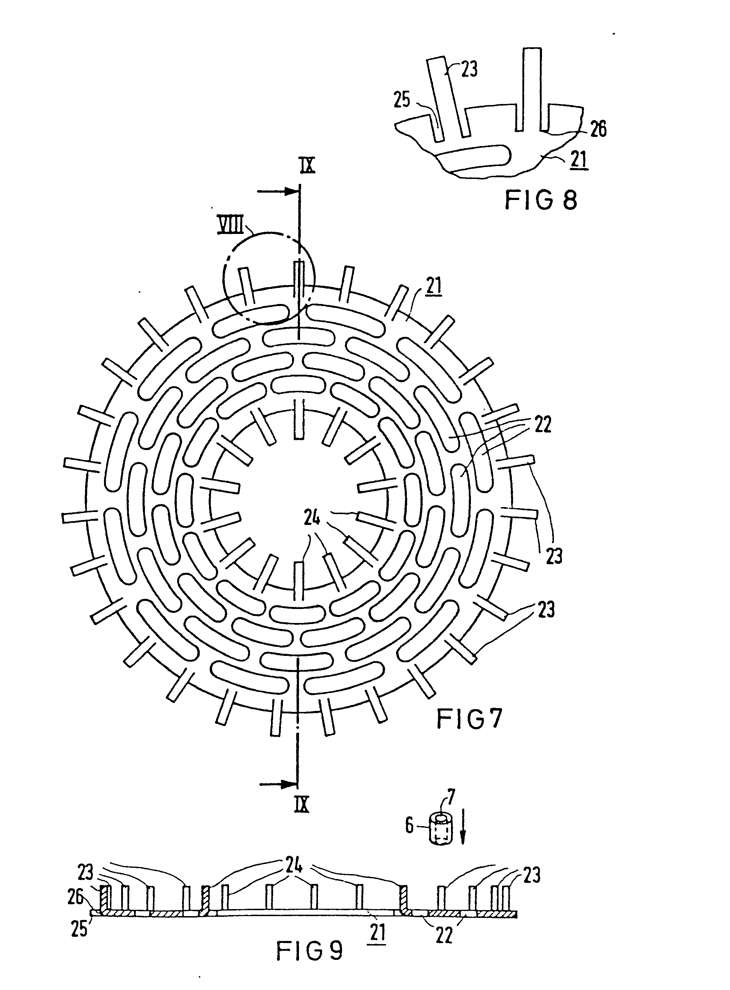

Zur Veranschaulichung der Möglichkeiten, welche die Erfindung bietet, ist in Fig. 6 nochmals ein einzelner Raschig-Ring 6 mit seiner zentralen Bohrung 7 dargestellt. Die entscheidenden Masse eines solchen Körpers sind seine Höhe h, der Durchmesser d seiner Innenbohrung und seine Wandstärke w. Die vorliegende Erfindung bietet die Möglichkeit, in ganz anderem Umfang als bei einer Schüttung diese Parameter entsprechend den Anforderungen zu variieren. Die viel geringeren Anforderungen an die Festigkeit der Raschig-Ringe ermöglichen eine Optimierung in bezug auf Oberfläche und Stömungswiderstand.

Figur 7 zeigt ein gelochtes Blech als Zusatzstruktur für die lagenweise Anordnung von Raschig-Ringen in einem Röhrenspaltofen mit Zentralrohr. Das Blech 21 ist mit in Umfangsrichtung verlaufenden Langlöchern 22 versehen, welche gegeneinander versetzt sind und sinnvollerweise jeweils auf konzentrischen Kreisen angeordnet sind, welche voneinander den Abstand eines Durchmessers der Raschig-Ringe haben. Auf der Aussenseite bzw. der Innenseite des Bleches stehen Stege 23 bzw. 24 über, welche jeweils untereinander etwa den Abstand des Durchmessers eines Raschig-Ringes haben. Diese Stege werden bei der Herstellung der erfindungsgemässen Anordnung alle nach einer Seite senkrecht hochgebogen und mit Raschig-Ringen bestückt. Zur besseren Veranschaulichung ist jedoch in Figur 7 und Figur 8 die Grundform des Bleches vor dem Biegen der Stege dargestellt.

Figur 8 zeigt dabei einen Ausschnitt aus Figur 7, der im Detail eine bevorzugte Ausführungsform der Stege zeigt. Dabei haben die Stege 23 einen etwas vom äusseren Rand des Bleches 21 entfernt liegenden Fusspunkt 26, damit die Scheibe 21 nach dem Hochbiegen der Stege 23 etwas über den Fusspunkt 26 übersteht. Dies wird durch parallel zu den Stegen 23 radial zur Mitte des Bleches 21 verlaufende kurze Schlitze 25 erreicht.

In Figur 9 ist ein Schnitt durch Figur 7 entlang der Linie IX–IX gezeigt, bei dem jedoch die Stege 23, 24 bereits in ihre endgültige abgewinkelte Lage gebogen sind. Die Stege können nun, wie in Figur 3 mit einem Pfeil angedeutet, mit Raschig-Ringen 6 bestückt werden, wobei die Stege 23 bzw. 24 von der inneren Bohrung 7 der Raschig-Ringe 6 aufgenommen werden. Der übrige Raum zwischen den auf Stegen sitzenden Raschig-Ringen ist mit aufrecht stehenden Raschig-Ringen dicht ausgefüllt. Anschliessend können viele solcher Lager zu Kartuschen zusammengesetzt oder nacheinander in den Reaktionsraum eingesetzt werden.

Die vorliegende Erfindung hat ihren Hauptanwendungsbereich in grosstechischen Anlagen, jedoch ist eine Verwendung auch bei kleinen Katalysatoren, z. B. im Automobilbau, nicht ausgeschlossen, da zusätzlich zu dem Vorteil der leichteren Auswechselbarkeit auch andere Vorteile auftreten. So sind die Raschig-Ringe bewährte Bauteile, welche auch hohe Temperatur-Wechselbelastungen und grosse Temperaturgradienten ertragen. Sie bieten daher im Gegensatz zu monolithischen keramischen Katalysator-Trägerkörpern erhebliche Vorteile überall da, wo Festigkeit und Beständigkeit gegen Temperaturschocks und dergleichen verlangt werden.

**Patentansprüche**

1. Katalysatoranordnung mit einem von einem Fluid durchströmbaren Kanal (10), in welchem auf Zusatzstrukturen viele gleichartige Katalysator-Trägerkörper (6), insbesondere Raschig-Ringe, vorhanden sind, dadurch gekennzeichnet, dass die Katalysator-Trägerkörper (6) in aufeinanderfolgenden Schichten angeordnet sind und innerhalb jeder Schicht eine Vielzahl von einlagig geordneten Trägerkörpern enthalten ist.

2. Katalysatoranordnung nach Anspruch 1, dadurch gekennzeichnet, dass Zusatzstrukturen (1) aus durchbrochenem Blech oder Drahtgewebe jeweils eine Schicht von Katalysator-Trägerkörpern (6) ganz oder teilweise käfigartig (1, 2, 3, 5 oder 1, 2, 3, 5, 30, 31) umgeben.

3. Katalysatoranordnung nach Anspruch 1 oder 2, wobei die Katalysator-Trägerkörper Raschig-Ringe sind, dadurch gekennzeichnet, dass die Katalysator-Trägerkörper (6) jeweils einlagig dicht nebeneinander auf den Zusatzstrukturen (1) angeordnet sind, vorzugsweise mit einer Ausrichtung ihrer Bohrung (7) in Strömungsrichtung des Fluids, wobei viele dieser einlagigen Anordnungen möglichst jeweils etwas gegeneinander verdreht, übereinandergeschichtet sind.

4. Katalysatoranordnung nach einem der vorhergehenden Ansprüche, wobei der Kanal (10) aus einem konzentrisch um eine Mittelrohr (8) angeordneten Ringraum besteht, insbesondere wobei der Kanal (10) der mit Katalysatormaterial füllbare Raum eines Röhrenspaltofens ist, dadurch gekennzeichnet, dass die Zusatzstrukturen (1) aus umgebördelten durchbrochenen Blechen oder Drahtgeweben bestehen, wobei die Umbördelungen (2) im Aussenbereich und die Umbördelungen (3) im Bereich des zentralen Rohres (8) so gestaltet sind, dass sie zwar an den Rohrwänden (8, 9) mit geringem Spiel anliegen, jedoch ein Herausziehen der Zusatzstrukturen (1) mit Katalysator-Trägerkörpern (6) zumindest nach einer Seite ohne Verkanten erlauben.

5. Katalysatoranordnung nach einem der vorhergehenden Ansprüche, dadurch gekennzeichnet, dass die Zusatzstruktur Umbörderlungen (2, 3, 5) aufweist, welche einerseits den auf der Zusatzstruktur anzuordnenden Katalysator-Trägerkörpern Halt geben und andererseits ein Verkanten an den Wänden des Kanals (10), zumindest beim Verschieben in einer Richtung vermeiden.

6. Katalysatoranordnung nach Anspruch 5, dadurch gekennzeichnet, dass die Zusatzstruktur aus mehreren Teilen (1, 31) besteht, welche zusammen einen geschlossenen Käfig um eine oder mehrere Schichten von Katalysator-Trägerkörpern (6) bilden.

7. Katalysatoranordnung nach Anspruch 5 oder 6, dadurch gekennzeichnet, dass die Zusatzstrukturteile (1) mit Noppen (13) oder ähnlich wirkenden Abstandshaltern versehen sind.

8. Katalysatoranordnung nach Anspruch 6 oder 7, insbesondere für Reaktionsräume mit einem Zentralrohr (8), dadurch gekennzeichnet, dass die käfigartige Zusatzstruktur einer Schicht aus zwei oder mehr Segmenten besteht, welche zusammen die Form einer das Zentralrohr (8) umgebenden Scheibe bilden, aber ohne Unterbrechung des Zentralrohres (8) entfernt werden können.

9. Katalysatoranordnung nach Anspruch 1 oder 2, wobei die Katalysator-Trägerkörper Raschig-Ringe (6) sind, dadurch gekennzeichnet, dass die Katalysator-Trägerkörper lagenweise auf durchbrochenen Blechen (21) aufrecht stehend angeordnet sind, wobei die durchbrochenen Bleche (21) im Bereich ihrer äusseren und ggf. inneren Ränder senkrecht abgewinkelte Stege (23, 24) etwa im Abstand des Durchmessers der Raschig-Ringe aufweisen, auf welche jeweils Raschig-Ringe (6) aufgesteckt sind, die somit die äussere Grenze jeder Lage bilden.

10. Katalysatoranordnung nach Anspruch 9, dadurch gekennzeichnet, dass die Ränder der durchbrochenen Bleche etwas über die Fusspunkte (26) der abgewinkelten Stege (23) hinausragen, jedoch weniger als der Radius der Raschig-Ringe, vorzugsweise geringfügig weniger als die Wandstärke der Raschig-Ringe.

11. Katalysatoranordnung nach Anspruch 9 oder 10 insbesondere für Kanäle mit ringförmigem Querschnitt, dadurch gekennzeichnet, dass die Abmessungen der gelochten Bleche kleiner als der lichte Querschnitt der Kanäle sind und die Masse der Stege (23, 24) und der Raschig-Ringe (6) gerade so gewählt sind, dass an allen Wänden Raschig-Ringe mit geringem Spiel anliegen.

**Claims**

1. A catalyst arrangement comprising a channel (10) through which a fluid can flow and in which a plurality of identical catalyst-carrier bodies (6), in particular Raschig rings, are arranged on supplementary structures, characterised in that the catalyst-carrier bodies (6) are arranged in successive strata, each stratum containing a plurality of carrier bodies arranged in a single layer.

2. A catalyst arrangement as claimed in Claim 1, characterised in that supplementary structures (1) made of perforated metal sheeting or wire netting in each case entiraly or partially surround one stratum of catalyst carrier bodies (6) in the manner of a cage (1, 2, 3, 5 or 1, 2, 3, 5, 30, 31).

3. A catalyst arrangement as claimed in Claim 1 or 2, where the catalyst carrier bodies are Raschig rings, characterised in that the catalyst carrier bodies (6) are in each case arranged densely one beside another in single layers on the supplementary structures (1), preferably with their bores (7) aligned in the direction of flow of the fluid, a plurality of the single-layer arrangements being stacked one above another, so far as possible in each case so as to be somewhat rotated in relation to one another.

4. A catalyst arrangement as claimed in one of the preceding Claims, where the channel (10) consists of an annular space arranged to be concentric with a central pipe (8), in particular where the channel (10) is the chamber of a tubular cracking furnance, which can be filled with catalyst material, characterised in that the supplementary structures (1) consist of flanged, perforated metal sheeting or wire netting, where the flanges (2) in the outer region and the flanges (3) in the region of the central pipe (8) are so designed that although they contact the pipe walls (8, 9) with a small amount of play, they permit the supplementary structures (1) with the catalyst carrier bodies (6) to be withdrawn, at least at one side, without tilting.

5. A catalyst arrangement as claimed in one of the preceding Claims, characterised in that the supplementary stucture is provided with flanges (2, 3, 5) which, on the one hand, provide support for the catalyst carrier bodies arranged on the supplementary structure and, on the other hand, prevent tilting at the walls of the channel (10), at least when moved in one direction.

6. A catalyst arrangement as claimed in Claim 5, characterised in that the supplementary structure consists of a plurality of parts (1, 31) which together form a closed cage around one or more strata of catalyst carrier bodies (6).

7. A catalyst arrangement as claimed in Claim 5 or 6, characterised in that the supplementary structure parts (1) are provided with knobs (13) or similarly acting spacing means.

8. A catalyst arrangement as claimed in Claim 6 or 7, in particular for reaction chambers having a central pipe (8), characterised in that the cage-like supplementary structure consists of a layer made of two or more segments which together form the shape of a plate surrounding the central pipe (8) but which can be removed without disconnecting the central pipe (8).

9. A catalyst arrangement as claimed in Claim 1 or 2, where the catalyst carrier bodies are Raschig rings (6), characterised in that the catalyst carrier bodies are arranged vertically in layers on perforated metal sheets (21), the perforated metal sheets (21) being provided in the region of their outer and in some cases their inner edges with vertically angled pins (23, 24), the spacing of which corresponds approximately to the diameter of the Raschig rings, and on to each of which are positioned Raschig rings (6) which thus form the outer boundary of each layer.

10. A catalyst arrangement as claimed in Claim 9, characterised in that the edges of the perforated metal sheets project somewhat beyond the bases (26) of the angled pins (23), but by less than the radius of the Raschig rings, and preferably slightly less than the wall thickness of the Raschig rings.

11. A catalyst arrangement as claimed in Claim 9 or 10, in particular for channels having an annular cross-section, characterised in that the dimensions of the perforated metal sheets are smaller than the internal cross-section of the channels, and the dimensions of the pins (23, 24) and of the Raschig rings (6) are so selected that Raschig rings contact all the walls with a small amount of play.

## Revendications

1. Agencement de catalyseurs comprenant un canal (10) dans lequel peut passer un fluide et dans lequel il est prévu de nombreux corps-supports de catalyseur (6) de même type, notamment des anneaux de Raschig, sur des structures supplémentaires, caractérisé en ce que les corps-supports de catalyseur (6) sont disposés en strates successives et un grand nombre de corps-supports ordonnés en une monocouche est contenu dans chaque strate.

2. Agencement de catalyseurs suivant la revendication 1, caractérisé en ce que des structures supplémentaires (1) en tôle perforée ou en tissu de fil métallique entourent respectivement, en tout ou partie, et à la manière d'une cage (1, 2, 3, 5 ou 1, 2, 3, 5, 30, 31) une strate de corps-supports de catalyseurs (6).

3. Agencement de catalyseurs suivant la revendication 1 ou 2, les corps-supports de catalyseur étant des anneaux de Raschig, caractérisé en ce que les corps-supports de catalyseurs (6) sont disposés en une monocouche étroitement les uns à côté des autres sur les structures supplémentaires (1), leur alésage étant de préférence aligné avec la direction d'écoulement du fluide, un certain nombre de ces agencements monocouches étant superposé en étant autant que possible un peu décalé angulairement les uns par rapport aux autres.

4. Agencement de catalyseurs suivant l'une des revendications précédentes, dans lequel le canal (10) est constitué d'une chambre annulaire disposée concentriquement autour d'un tube médian (8), le canal étant notamment la chambre d'un four tubulaire de craquage susceptible d'être emplie de matériau servant de catalyseur, caractérisé en ce que les structures supplémentaires (1) sont constituées de tôles perforées ou de tissus de fil métallique rabattus sur les bords, les bords rabattus (2) de la région extérieure et les bords rabattus (3) de la région du tube central (8) étant conformés de manière à s'appliquer avec un faible jeu aux parois des tubes (8, 9), mais à permettre de retirer les structures supplémentaires (1) ayant des corps-supports de catalyseurs (6) au moins d'un côté sans coincement.

5. Agencement de catalyseurs suivant l'une des revendications précédentes, caractérisé en ce que la structure supplémentaire comporte des bords rabattus (2, 3, 5) qui, d'une part, maintiennent les corps-supports de catalyseurs disposés sur la structure supplémentaire et, d'autre part, empêchent tout coincement sur les parois du canal (10), au moins lors du déplacement dans une direction.

6. Agencement de catalyseurs suivant la revendication 5, caractérisé en ce que la structure supplémentaire est constituée de plusieurs parties (1, 31) qui forment ensemble une cage fermée autour d'une strate ou de plusieurs strates de corps-supports de catalyseurs (6).

7. Agencement de catalyseurs suivant la revendication 5 ou 6, caractérisé en ce que les parties de la structure supplémentaire (1) sont munies de tétons (13) ou d'entretoises à fonction analogue.

8. Agencement de catalyseurs suivant la revendication 6 ou 7, notamment pour des chambres de réaction à tube central (8), caractérisé en ce que la structure supplémentaire d'une strate est constituée de deux ou de plusieurs segments qui donnent ensemble la configuration d'un disque entourant le tube central (8), mais qui peuvent être enlevés sans couper le tube central (8).

9. Agencement de catalyseurs suivant la revendication 1 ou 2, les corps-supports de catalyseurs étant des anneaux de Raschig (6), caractérisé en ce que les corps-supports de catalyseurs sont disposés verticalement couche par couche sur des tôles (21) perforées comportant, dans la région de leurs bords extérieurs et, le cas échéant, intérieurs, des barrettes (23, 24) coudées verticalement à un intervalle correspondant à peu près au diamètre des anneaux de Raschig (6), ceux-ci étant enfilés sur ces barrettes et formant ainsi la limite extérieuré de chaque couche.

10. Agencement de catalyseurs suivant la revendication 9, caractérisé en ce que les bords des tôles perforées dépassent un peu des pieds (26) des barrettes (23) coudées, mais d'une valeur inférieure au rayon des anneaux de Raschig et, de préférence, d'une valeur légèrement inférieure à l'épaisseur de la paroi des anneaux de Raschig.

11. Agencement de catalyseurs suivant la revendication 9 ou 10, notamment pour des canaux de section transversale annulaire, caractérisé en ce que les dimensions des tôles perforées sont inférieures à la section transversale intérieure des canaux et la dimension des barrettes (23, 24) et des anneaux de Raschig (6) est choisie exactement de façon que des anneaux de Raschig s'appliquent avec un faible jeu sur toutes les parois.

FIG 1

FIG 3

FIG 2

FIG 6

FIG 4

FIG 5a

FIG 5b

FIG 5c

FIG 5d

FIG 5e

FIG 8

FIG 7

FIG 9